# EUROPEAN PATENT SPECIFICATION

(11) **EP 3 825 250 B1**
(45) Date of publication and mention of the grant of the patent: **29.06.2022**
(21) Application number: 20208025.5
(22) Date of filing: 17.11.2020
(51) Int. Cl.: B65D 65/46, B65D 85/804, C08L 67/02, C08L 67/04

(54) **METHOD FOR CONTINOUSLY MANUFACTURING ARTICLES MADE OF FOOD-GRADE COMPOSTABLE COMPOUND**
VERFAHREN ZUR KONTINUIERLICHEN HERSTELLUNG VON ARTIKELN AUS EINER KOMPOSTIERBAREN VERBINDUNG MIT LEBENSMITTELQUALITÄT
PROCÉDÉ DE FABRICATION CONTINUE D'ARTICLES À PARTIR D'UN COMPOSITE COMPOSTABLE DE QUALITÉ ALIMENTAIRE

(30) Priority: 19.11.2019 IT 201900021540
(43) Date of publication of application: 26.05.2021
(73) Proprietor: BIBETECH S.p.A., 36075 Montecchio Maggiore (VI) (IT)
(72) Inventor: MAZZOLA, Davide, 36075 Montecchio Maggiore (VI) (IT)
(74) Representative: Autuori, Angelo

(56) References cited:
- WO-A1-2014/097039
- WO-A1-2015/162632
- US-A1- 2018 148 250

## Description

### Field of the invention

The present invention generally relates to the field of manufactured articles for food use, and in particular it relates to a method for the continuous production of manufactured articles made of a food-grade compostable compound.

### Definitions

In the present document, the term "% by weight" referring to one or more components in a composition of interest is used to indicate the percentage of the dry weight of such one or more components with respect to the total dry weight of the composition.

In the present document, the term "matrix" and its derivatives is used to indicate a polymer or its derivatives is used to indicate a polymeric material suitable to provide the molecular structure of the finished product.

In the present text, by the term "filler" and its derivatives is used to indicate solid materials made of particles or fibrosis, substantially chemically inert, with the function of fillers.

In the present document, the term "compostable" and its derivatives with reference to a compound is used to indicate the ability of the latter to disintegrate within a defined period of time, at predetermined temperature and aerobic conditions, according to the conditions laid down by the by the ISO 14855 standard.

In the present document, the term "bio-based" and its derivatives with reference to a compound is used to indicate the content in the latter made of renewable raw materials, according to the conditions laid down by the ASTM D6866 standard.

In the present document, the term "food grade" and its derivatives relating to a compound is used to indicate its suitability for contact with foodstuffs, in compliance with the EU 10/2011 standard.

In the present document, the term "plasticiser agent" and its derivatives is used to indicate a compound or a mixture of compounds which can increase the flexibility, processability and extension of the polymer in which it is incorporated. A plasticiser agent may reduce the viscosity of the mixture, lower the phase transition temperatures of the second order, and the elastic modulus of the product.

In the present document, the term "additive" and its derivatives is used to indicate a substance which, when added to a compound, improves one or more characteristics thereof.

### State of the Art

Manufactured articles made of thermoplastic polymeric compound, for example polypropylene, suitable for making various manufactured articles for food use, such as coffee capsules, fruit and vegetable containers, ice cream containers and the like, are known, e.g. from document WO2014/097039. This document discloses a method for the continuous production of coffee capsules made of a compostable food-grade polymeric material comprising PLA, comprising the steps of injection molding of the polymeric material to obtain a predetermined number of semi-finished manufactured articles and subsequently baking said semi-finished manufactured articles in an oven.

A recognised drawback of such manufactured articles lies in the high environmental impact thereof, both in terms of materials used for the production and disposal of the finished product.

On the other hand, known are compostable materials whose nature makes them particularly unsuitable for obtaining resistant manufactured articles of any type.

Thus, the use of compostable materials to obtain manufactured articles is still limited.

### Summary of the invention

An object of the present invention is to overcome the drawbacks described above by providing a method for the continuous production of manufactured articles for food use made of particularly efficient food-grade compostable compound.

Another object of the present invention is to provide a method that allows the use of a compostable compound for producing manufactured articles.

These and other objects that will be more apparent hereinafter, are attained by the method according to claim 1.

The dependent claims describe advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
**FIGS. 1A** and **1B** are axonometric views of a manufactured article **1** in the form of a coffee capsule pierced respectively with and without having mechanical collapse in particular of the side walls **12**;
**FIG. 1C** is an axonometric view of a schematic form of a manufactured article **1** in the form of a coffee capsule;
**FIG. 2** is an axonometric view of the conveyor belt **3** and of the oven **2** superimposed thereon;

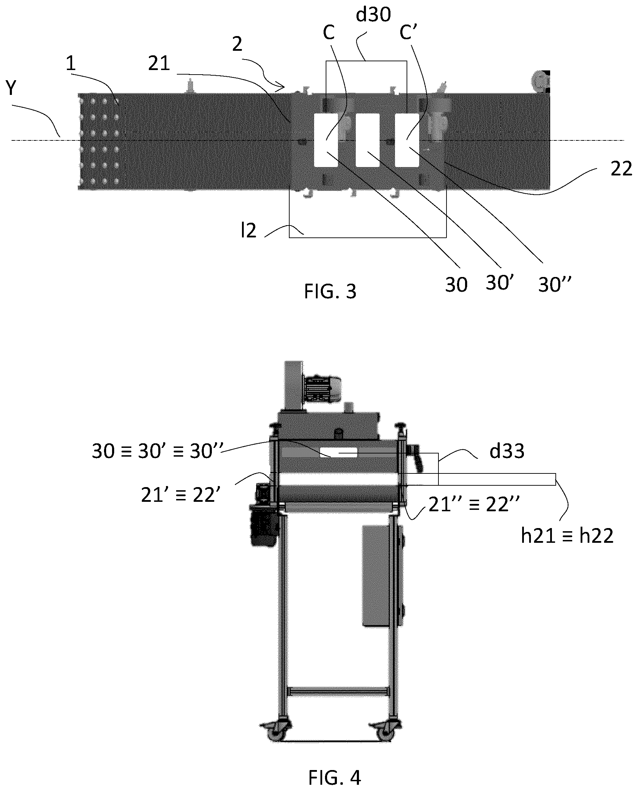

**FIGS. 3** and **4** are respectively top and front views of the view of FIG. 2.

### Detailed description of some preferred embodiments

With reference to the figures mentioned above, herein described is a method for the continuous production of a predetermined number of manufactured articles 1 for food use, for example containers, packages, disposable cutlery, straws and the like, made of food grade compostable compound.

The compound used consists of:
- 60% to 80% by weight of a PBAT matrix;
- 6% to 10% by weight of PLA;
- from 10% to 20% by weight of one or more inorganic fillers, for example from 5% to 10% by weight of calcium carbonate and from 5% to 10% of talc;
- from 0% to 10% by weight of at least one plasticiser agent, for example glycerine, citrates, succinates or epoxidized soybean oil;
- from 0% to 20% by weight of at least one additive.

The % by weight are based on the total weight of the polymeric compound.

Suitably, the at least one additive may be a stabiliser agent, which may be selected from carbodiimides or tris (nonyl-1-phenyl) phosphite, and/or an antioxidant agent, which may be selected from ascorbyl palmitate or butylated hydroxyanisole or butylated hydroxytoluene, or a pigmenting agent, which may be selected from natural food colorants.

In this manner, in particular thanks to the presence of inorganic fillers, it is possible to prevent the mechanical collapse of the manufactured articles **1**, as will be described more in detail hereinafter.

Furthermore, the material used is food grade material in compliance with the EU 10/2011 standard.

Likewise, the compound in question is compostable so that the compound disintegrates, 90% under aerobic conditions, over a period of time less than or equal to six months, at a temperature equal to 56- 60°C, according to the conditions laid down by the ISO 14855 standard.

In this manner, particularly resistant but at the same time compostable manufactured articles **1** can be obtained, with the ensuing reduction of the environmental impact.

In addition, the compound is at least 70% bio-based, and preferably at least 80%, according to the ASTM D6866 test standard.

Suitably, the compound used may have a tensile strength at break according to ISO 527-1/-2 higher than 37 MPa, and preferably comprised between 40 MPa and 50 MPa.

Furthermore, the polymeric compound may preferably have a tensile elastic modulus according to ISO 527-1/-2 higher than 3750 MPa, and preferably comprised between 4000 MPa and 5000 MPa.

Furthermore, the polymeric compound may advantageously have a Charpy impact strength according to DIN EN ISO 179-1/1eA greater than 85 KJ/m², and preferably comprised between 90 KJ/m² and 100 KJ/m².

Preferably, the method described hereinafter may allow to obtain manufactured articles 1 which have mechanical characteristics capable of resisting deformation while having a very low environmental impact.

The method provides for a step for the injection moulding of the polymeric compound, to obtain a defined number of semi-finished manufactured articles 1 having a predetermined extraction temperature, which may be comprised between 40°C and 60°C, preferably comprised between 45°C and 55°C.

Subsequently, the manufactured articles **1** obtained are transported along a conveyor belt **3** defining an axis **Y** to undergo a subsequent thermal treatment step by maintaining at a second temperature substantially higher than the extraction temperature of the semi-finished products, so as to stabilise the mechanical properties of the manufactured articles **1.**

The step of maintaining at the second temperature may be carried out by using a tunnel furnace **2** extending along the same axis **Y.**

Preferably, this maintenance step can contribute toward stabilising the mechanical properties of the semi-finished manufactured articles **1**, preventing the mechanical collapse of the finished manufactured articles **1.**

According to a preferred but non-exclusive embodiment, the manufactured articles **1** can be in the form of containers comprising a bottom wall **11** and a lateral wall **12.**

As known, the polymeric compound may be melted and injected at high pressure into the closed mould, which will be opened after the solidification of the container 1, having an extraction temperature equal to about 50°C.

In particular, such moulding can may be carried out with an injection pressure with a value comprised in a range of 1250- 1450 bars, preferably 1300- 1400 bars, even more preferably equal to 1350 bars, and a maintenance pressure with a value comprised in a range of 1000- 1250 bars, preferably 1100- 1200 bars, even more preferably equal to 1150 bars.

Furthermore, the moulding step may be carried out over a period of time equal to about 8- 12 s, preferably 9- 10 s, even more preferably equal to 9.5 s, with an injection speed equal to about 105- 120 cm³/s, preferably 110- 115 cm³/s, even more preferably equal to 112 cm³/s.

Subsequently, the containers **1** obtained may be transported along the conveyor belt **3** to undergo the subsequent thermal treatment step by maintaining at an operating temperature comprised between 200°C and 250°C, preferably comprised between 220°C and 240°C, and even more preferably equal to 230°C, so as to stabilise the mechanical properties of the containers **1.**

During the thermal maintenance step, the containers **1** may have a temperature of about 100°C.

The transportation may occur at a speed comprised between 15 mm/s and 30 mm/s, preferably 20 mm/s - 25 mm/s, even more preferably equal to 22 mm/s.

Suitably, the tunnel furnace **2** used during the thermal treatment step may comprise an inlet **21** and an outlet **22.**

In particular, the inlet **21** may comprise two sides **21'** and **21"** parallel to each other and substantially perpendicular to the axis **Y** having a height **h21** equal to about 66 mm.

Likewise, the outlet **22** may comprise two sides **22'** and **22"** parallel to each other and substantially perpendicular to the axis **Y** having a height **h22** equal to about 66 mm.

Furthermore, the oven **2** can have a length **I2** defined along the axis **Y** in a range comprised between 220 and 2200 mm, preferably 1000 and 1500 mm, even more preferably equal to 1300 mm.

Suitably, the time of stay of the containers **1** in the furnace **2** may be equal to about 40 s - 80 s, preferably equal to 50 s - 70 s, and even more preferably close to 60 s.

The conveyor belt **3**, and the semi-finished containers 1 therewith, may then advance along the axis **Y** to pass through the inlet **21**, along a length equal to the length **I2** of the furnace **2** and through the outlet **22** to obtain the finished containers 1.

The furnace **2** may comprise three consecutive resistors **30**, **30'**, **30"**, arranged side by side and parallel to the belt **3**, positioned at a distance **d33** from the latter equal to about 35-65 mm, preferably 45 mm.

Furthermore, the overall distance **d30** between the centres **C** and **C'** of the resistors **30** and **30"** can be substantially equal to 700 mm.

Likewise, these resistors **30**, **30'**, **30"** can have a power comprised between 900 and 2300 W.

It is clear that the aforementioned measurements relating to the furnace **2** and the components thereof, such as for example the height of the openings **21** and **22**, the length **I2**, the number of resistors and the distances **d30** and **d33** are purely indicative and may be subject of modifications depending on the manufactured article **1** subject of production without departing from the scope of protection of the attached claims.

The containers **1** in question can be pierced, in particular at the bottom wall **11** and they can also be crushed without collapsing mechanically.

In the following description, though the container **1** will be described as a coffee capsule, this method can be used to obtain any packaging container.

In particular, the capsule **1** may comprise a flange area **13** comprising a gasket **13'** so as to ensure the hydraulic sealing thereof when in use, as is known.

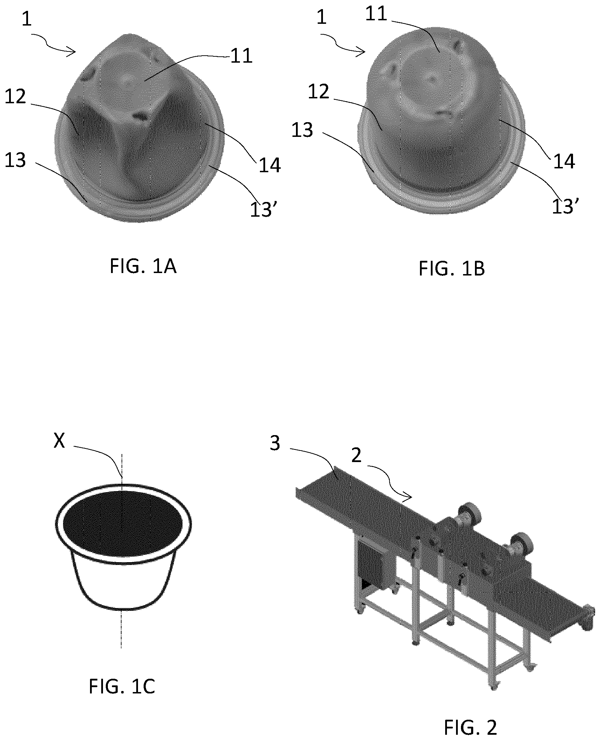

Furthermore, the lateral wall **12** of the capsule **1** may comprise a crushing area **14** consecutive to the flange area **13**, particularly as shown **FIGS. 1A and 1B****.**

The capsule **1** may have a substantially longitudinal extension along an axis X and the crushing area **14** may be susceptible to be compressed longitudinally along a direction parallel to the axis **X**, for a compression equal to 1- 3 mm when capsule **1** is in use.

Furthermore, the bottom wall **11** can be pierced so as to guarantee the infusion and/or the dispensing of the coffee from the capsule **1** when it is in use.

FIGS. 1A and 1B show the effect of the aforementioned thermal treatment.

As a matter of fact, FIG. 1A illustrates a capsule which has not undergone the thermal treatment, and which has therefore been allowed to cool immediately after removal from the injection mould. This capsule was introduced into a Nespresso^{®} machine, of the type described in patent application EP1654966A1, and an attempt was made to perforate it.

However, as clearly observable, the capsule collapsed mechanically after such operation.

On the contrary, FIG. 1B shows a capsule made as described above, and i.e. it was subjected to the thermal treatment illustrated above after undergoing the injection process. This capsule was inserted in the same machine mentioned above and an attempt was made to perforate it.

As clearly observable, the perforation occurred without the mechanical collapse of the side wall.

In light of the above, it is clear that the invention attains the pre-set objectives.

Even though the invention has been described with particular reference to the attached figures, the reference numbers utilised in the description and in the claims are meant for improving the intelligibility of the invention and thus do not limit the claimed scope of protection in any manner whatsoever.

The invention is susceptible to numerous modifications and variants, without departing from the scope of protection defined by the attached claims.

## Claims

1. A method for the continuous production of manufactured articles (1) for food use made of a food-grade compostable polymeric compound consisting of:
- from 60% to 80% by weight of a PBAT matrix;
- from 6% to 10% by weight of PLA;
- from 10% to 20% by weight of one or more inorganic fillers;
- from 0% to 10% by weight of at least one plasticiser agent;
- from 0% to 20% by weight of at least one additive;
where the % by weight are based on the total weight of the polymeric compound;
wherein the polymeric compound is at least 70% bio-based, and preferably at least 80%, according to the ASTM D6866 test standard;
wherein the compound is biodegradable according to the conditions laid down by the ISO 14855 standard for industrial compostability;
wherein the method sequentially comprises the steps of:
- injection moulding of the polymeric compound to obtain a predetermined number of semi-finished manufactured articles (**1**) having a first extraction temperature;
- thermal treatment of said semi-finished articles (**1**) to keep them at a second operating temperature higher than said first extraction temperature for a period of operating time, so as to obtain finished articles (**1**).

2. Method according to claim 1, wherein the polymeric compound has a tensile strength at break according to ISO 527-1/-2 higher than 37 MPa, and preferably comprised between 40 MPa and 50 MPa.

3. Method according to any one of the preceding claims, wherein the polymeric compound has a tensile elastic modulus according to ISO 527-1/-2 higher than 3750 MPa, and preferably comprised between 4000 MPa and 5000 MPa.

4. Method according to any one of the preceding claims, wherein the polymeric compound has a Charpy impact strength according to DIN EN ISO 179-1/1eA greater than 85 KJ/m², and preferably comprised between 90 KJ/m² and 100 KJ/m².

5. Method according to any one of the preceding claims, wherein said inorganic fillers consist of:
- from 5% to 10% by weight of calcium carbonate; and
- 5% to 10% talc;
wherein the % by weight are calculated with respect to the total weight of the polymeric compound.

6. Method according to any one of the preceding claims, wherein said moulding step is carried out over a period of time comprised in a range from 8- 12 s, preferably 9- 10 seconds.

7. Method according to any one of the preceding claims, wherein said extraction temperature is comprised between 40 °C and 60 °C, preferably comprised between 45 °C and 55 °C.

8. Method according to any one of the preceding claims, wherein said operating temperature is comprised between 200 °C and 250 °C, preferably comprised between 220 °C and 240 °C.

9. Method according to any one of the preceding claims, wherein said operating time is comprised between 45 sec and 80 sec, and more preferably comprised between 50 sec and 70 sec.

10. A method according to any one of the preceding claims, wherein said manufactured articles (**1**) are coffee capsules, each comprising at least one bottom wall (**11**) and at least one side wall (**12**).

11. Method according to the preceding claim, wherein, after said thermal treatment step, said at least one bottom wall (**11**) of each capsule can be pierced to allow the infusion and/or the dispensing of coffee from the same capsule when in use, without said side wall (**12**) collapsing mechanically.

12. Method according to claim 10 or 11, where said coffee capsules define a first substantially longitudinal axis (**X**), the capsules further comprising a flange area (**13**) integrally joined with said side wall (**12**), the latter further comprising a crushing area (**14**) in proximity of said flange area (**13**), said crushing area (**14**) being susceptible to compress longitudinally by a value equal to about 1-3 mm along a direction parallel to said first axis (**X)** when the capsule is in use.

13. Method according to any one of the preceding claims, wherein said thermal treatment step is carried out in a furnace (**2**).

14. Method according to the preceding claim, wherein said furnace (**2**) is of the tunnel type, said thermal treatment step being carried out by conveying said semi-finished manufactured articles (**1**) through said tunnel furnace (2) at a conveying speed.

15. Method according to the preceding claim, wherein said tunnel-type furnace (**2**) has a length (**I2**) comprised between 220 mm and 2200 mm, and preferably comprised between 1000 mm and 1500 mm, said conveying speed being comprised between 15 mm/sec and 30 mm/s, and preferably comprised between 20 mm/sec and 25 mm/sec.

## Patentansprüche

1. Verfahren zur kontinuierlichen Herstellung von Artikeln (1) zur Verwendung mit Lebensmitteln aus einer lebensmitteltauglichen kompostierbaren Polymerzusammensetzung bestehend aus:
- von 60 Gew. % bis 80 Gew. % einer PBAT Matrix;
- von 6 Gew. % bis 10 Gew. % eines PLA;
- von 10 bis 20 Gew. % eines oder mehrerer anorganischer Füllstoffe;
- von 0 Gew. % bis 10 Gew. % wenigstens eines Weichmachers;
- von 0 Gew. % bis 20 Gew. % wenigstens eines Additivs;
wobei die Gewichtsanteile auf das Gesamtgewicht der Polymerzusammensetzung bezogen sind;
wobei die Polymerzusammensetzung zu wenigstens 70 % und vorzugsweise zu wenigstens 80 % biologisch ist, gemäß dem ASTM D6866 Prüfstandard;
wobei die Zusammensetzung gemäß dem ISO 14855 Standard für industrielle Kompostierbarkeit biologisch abbaubar ist;
wobei das Verfahren der Reihe nach folgende Schritte umfasst:
- Spritzgießen der Polymerzusammensetzung, um eine vorbestimmte Anzahl von halbfertigen Artikeln (1) mit einer ersten Ausbringtemperatur zu erhalten;
- thermische Behandlung der halbfertigen Artikel (1), um diese über eine Betriebszeit bei einer zweiten Betriebstemperatur zu halten, die höher ist als die erste Ausbringtemperatur, um fertige Artikel (1) erhalten.

2. Verfahren nach Anspruch 1, bei welchem die Polymerzusammensetzung eine Bruchzugfestigkeit nach ISO 527-1/-2 von mehr als 37 MPa und vorzugsweise zwischen 40 und 50 MPa aufweist.

3. Verfahren nach einem der vorstehenden Ansprüche, bei dem die Polymerzusammensetzung ein Elastizitätsmodul gemäß ISO 527-1/-2 von mehr als 3750 MPa und vorzugsweise zwischen 4000 MPa und 5000 MPa aufweist.

4. Verfahren nach einem der vorstehenden Ansprüche, bei welchem die Polymerzusammensetzung eine Charpy Schlagzähigkeit nach DIN EN ISO 179-1/1eA von mehr als 85 kJ/m² und vorzugsweise zwischen 90 kJ/m² und 100 kJ/m² aufweist.

5. Verfahren nach einem der vorstehenden Ansprüche, bei dem der anorganische Füllstoff besteht aus:
- von 5 Gew. % bis 10 Gew. % Calciumcarbonat; und
- 5 bis 10 % Talg;
wobei die Gewichtsanteile sich auf das Gesamtgewicht der Polymerzusammensetzung beziehen.

6. Verfahren nach einem der vorstehenden Ansprüche, bei welchem der Schritt des Gießens über eine Zeitspanne zwischen 8 bis 12 Sekunden, vorzugsweise zwischen 9 bis 10 Sekunden durchgeführt wird.

7. Verfahren nach einem der vorhergehenden Ansprüche, bei welchem die Ausbringtemperatur zwischen 40 °C und 60 °C, vorzugsweise zwischen 45 °C und 55 °C beträgt.

8. Verfahren nach einem der vorstehenden Ansprüche, bei welchem die Betriebstemperatur zwischen 200 °C und 250 °C, vorzugsweise zwischen 220 °C und 240 °C beträgt.

9. Verfahren nach einem der vorstehenden Ansprüche, bei welchem die Betriebszeit zwischen 45 Sekunden und 80 Sekunden, und weiterhin bevorzugt zwischen 50 Sekunden und 70 Sekunden beträgt.

10. Verfahren nach einem der vorstehenden Ansprüche, wobei die hergestellten Artikel (1) Kaffeekapseln sind, die jeweils eine Bodenwand (11) und wenigstens eine Seitenwand (12) umfassen.

11. Verfahren nach dem vorstehenden Anspruch, bei welchem nach der thermischen Behandlung die wenigstens eine Bodenwand (11) jeder Kapsel durchstoßen werden kann, um den Aufguss und/oder die Ausgabe von Kaffee aus der Kapsel bei Gebrauch zu ermöglichen, wobei die Seitenwand (12) mechanisch kollabiert.

12. Verfahren nach Anspruch 10 oder 11, bei welchem die Kaffeekapseln eine erste sich im Wesentlichen in Längsrichtung erstreckende Achse (X) definieren und die Kapseln weiterhin einen Flanschbereich (13) umfassen, der einstückig mit der Seitenwand (12) ausgebildet ist, wobei Letztere weiterhin einen Quetschbereich (14) in der Nähe des Flanschbereichs (13) umfasst, wobei der Quetschbereich (14) in Längsrichtung um einen Wert von etwa 1 bis 3 mm in einer sich parallel zu der ersten Achse (X) erstreckenden Richtung komprimiert werden kann, wenn die Kapsel sich in Gebrauch befindet.

13. Verfahren nach einem der vorstehenden Ansprüche, wobei die thermische Behandlung in einem Ofen (2) durchgeführt wird.

14. Verfahren nach dem vorstehenden Anspruch, bei welchem der Ofen (2) als Tunnelofen ausgebildet ist, wobei die thermische Behandlung durch Fördern der halbfertigen Artikel (1) durch den Tunnelofen (2) bei einer Fördergeschwindigkeit umfasst.

15. Verfahren nach dem vorstehenden Anspruch, bei welchem der Tunnelofen (2) eine Länge (L2) zwischen 220 mm und 2200 mm und vorzugsweise zwischen 1000 mm und 1500 mm umfasst und die Fördergeschwindigkeit zwischen 15 mm/s und 30 mm/s und vorzugsweise zwischen 20 mm/s und 25 mm/s beträgt.

## Revendications

1. Procédé pour la production continue d'articles manufacturés (1) à usage alimentaire réalisés en un composé polymérique compostable de qualité alimentaire consistant en :
- de 60 % à 80 % en poids d'une matrice PBAT ;
- de 6 % à 10 % en poids de PLA ;
- de 10 % à 20 % en poids d'une ou de plusieurs charges inorganiques ;
- de 0 à 10 % en poids d'au moins un agent plastifiant ;
- de 0 à 20 % en poids d'au moins un additif ;
où les % en poids sont basés sur le poids total du composé polymérique ;
dans lequel le composé polymérique est bio à au moins 70 %, et de préférence au moins 80 %, selon la norme d'essai ASTM D6866 ;
dans lequel le composé est biodégradable selon les conditions stipulées par la norme ISO 14855 de compostabilité industrielle ;
dans lequel le procédé comprend séquentiellement les étapes de :
- moulage par injection du composé polymérique pour obtenir un nombre prédéterminé d'articles manufacturés semi-finis (1) ayant une première température d'extraction ;
- traitement thermique desdits articles semi-finis (1) pour les garder à une deuxième température de fonctionnement plus élevée que ladite première température d'extraction pendant une période de temps de fonctionnement, de façon à obtenir des articles finis (1).

2. Procédé selon la revendication 1, dans lequel le composé polymérique a une résistance à la traction à la rupture selon la norme ISO 527-1/-2 supérieure à 37 MPa, et de préférence comprise entre 40 MPa et 50 MPa.

3. Procédé selon l'une quelconque des revendications précédentes, dans lequel le composé polymérique a un module d'élasticité en traction selon la norme ISO 527-1/-2 supérieur à 3750 MPa, et de préférence compris entre 4000 MPa et 5000 MPa.

4. Procédé selon l'une quelconque des revendications précédentes, dans lequel le composé polymérique a une résistance de résilience Charpy selon la norme DIN EN ISO 179-1/1eA supérieure à 85 KJ/m², et de préférence comprise entre 90 KJ/m² et 100 KJ/m².

5. Procédé selon l'une quelconque des revendications précédentes, dans lequel lesdites charges inorganiques consistent en :
- de 5 % à 10 % en poids de carbonate de calcium ; et
- 5 % à 10 % de talc ;
dans lequel les % en poids sont calculés par rapport au poids total du composé polymérique.

6. Procédé selon l'une quelconque des revendications précédentes, dans lequel ladite étape de moulage est réalisée sur une période de temps comprise dans une plage de 8 à 12 s, de préférence 9 à 10 secondes.

7. Procédé selon l'une quelconque des revendications précédentes, dans lequel ladite température d'extraction est comprise entre 40 °C et 60 °C, de préférence comprise entre 45 °C et 55 °C.

8. Procédé selon l'une quelconque des revendications précédentes, dans lequel ladite température de fonctionnement est comprise entre 200 °C et 250 °C, de préférence comprise entre 220 °C et 240 °C.

9. Procédé selon l'une quelconque des revendications précédentes, dans lequel ledit temps de fonctionnement est compris entre 45 s et 80 s, et de manière davantage préférée compris entre 50 s et 70 s.

10. Procédé selon l'une quelconque des revendications précédentes, dans lequel lesdits articles manufacturés (1) sont des capsules de café, comprenant chacune au moins une paroi de fond (11) et au moins une paroi latérale (12).

11. Procédé selon la revendication précédente, dans lequel, après ladite étape de traitement thermique, ladite au moins une paroi de fond (11) de chaque capsule peut être percée pour permettre l'infusion et/ou la distribution de café depuis la même capsule lorsqu'elle est en utilisation, sans que ladite paroi latérale (12) ne s'effondre mécaniquement.

12. Procédé selon la revendication 10 ou 11, dans lequel lesdites capsules de café définissent un premier axe (X) sensiblement longitudinal, les capsules comprenant en outre une zone de collerette (13) jointe intégralement à ladite paroi latérale (12), cette dernière comprenant en outre une zone d'écrasement (14) à proximité de ladite zone de collerette (13), ladite zone d'écrasement (14) étant susceptible de se comprimer longitudinalement d'une valeur égale à environ 1 à 3 mm suivant une direction parallèle audit premier axe (X) lorsque la capsule est en utilisation.

13. Procédé selon l'une quelconque des revendications précédentes, dans lequel ladite étape de traitement thermique est réalisée dans un four (2).

14. Procédé selon la revendication précédente, dans lequel ledit four (2) est du type tunnel, ladite étape de traitement thermique étant réalisée en acheminant lesdits articles manufacturés semi-finis (1) à travers ledit four tunnel (2) à une vitesse d'acheminement.

15. Procédé selon la revendication précédente, dans lequel ledit four de type tunnel (2) a une longueur (12) comprise entre 220 mm et 2200 mm, et de préférence comprise entre 1000 mm et 1500 mm, ladite vitesse d'acheminement étant comprise entre 15 mm/s et 30 mm/s, et de préférence comprise entre 20 mm/s et 25 mm/s.
